# EUROPÄISCHE PATENTSCHRIFT

(11) **EP 0 672 635 B1**
(45) Veröffentlichungstag und Bekanntmachung des Hinweises auf die Patenterteilung: **17.06.1998**
(21) Anmeldenummer: 95103464.4
(22) Anmeldetag: 10.03.1995
(51) Int. Cl.: C04B 14/06

(54) **Formkörper, enthaltend Silica-Aerogel-Partikel sowie Verfahren zu ihrer Herstellung**
Molded bodies containing silica-aerogel particles and process for their manufacture
Corps moulés contenant des particules d'aérogel de silice et procédé pour leur fabrication

(30) Priorität: 18.03.1994 DE 4409309
(43) Veröffentlichungstag der Anmeldung: 20.09.1995
(73) Patentinhaber: BASF AKTIENGESELLSCHAFT, 67056 Ludwigshafen (DE)
(72) Erfinder: Mielke, Manfred, D-69118 Heidelberg (DE); von Dungen, Karl-Heinz, D-68642 Bürstadt (DE)

(56) Entgegenhaltungen:
- EP-A- 0 130 629
- EP-A- 0 340 707
- EP-A- 0 489 319
- CHEMICAL ABSTRACTS, vol. 102, no. 12, 18.März 1985 Columbus, Ohio, US; abstract no. 99952w, 'Inorganic fiber molded body' & JP-A-59 199 567 (ASASI DENKA KOGYO KK)

## Beschreibung

Die Erfindung betrifft Formkörper, die Silica-Aerogel-Partikel enthalten sowie ein Verfahren zu ihrer Herstellung. Die Erfindung betrifft insbesondere solche Formkörper, die mindestens ein organisches oder anorganisches Bindemittel enthalten.

Aus der EP-A-0 340 707 sind Dämmstoffe der Dichte 0,1 bis 0,4 g/cm³ mit gutem Wärmedämmvermögen und ausreichend hoher Druckfestigkeit bekannt, welche durch Verkleben von Silica-Aerogel-Partikeln mit einem anorganischen oder organischen Bindemittel erhalten werden. Als geeignete anorganische Bindemittel werden beispielhaft Zement, Gips, Kalk und/oder Wasserglas genannt.

Für die Herstellung derartiger Formkörper ist jedoch häufig die Verwendung hoher Bindemittelgehalte notwendig. Darüber hinaus sind viele anwendungstechnische Eigenschaften wie beispielsweise Wärmeleitfähigkeit oder Bruchfestigkeit noch verbesserungsbedürftig. Probleme ergeben sich häufig auch bei der Herstellung der Formkörper. Zahlreiche organische Bindemittel sind auf Grund ihrer hohen Viskosität nicht verwendbar. Die Verwendung niedrigviskoser Dispersionen erfordert hierbei häufig eine zu große Verdünnung mit wäßrigen Lösungsmitteln, was den Nachteil hat, daß das in den Dispersionen vorliegende Bindemittel infolge fehlender Benetzung der Aerogeloberfläche keine Verbindung mit den in der Regel hydrophoben Silica-Aerogel-Partikeln eingeht.

EP-A-0 489 319 beschreibt die Herstellung von Verbundschaumstoffen mit einer Dichte von 0,08 bis 0,4 g/cm³, mit niedriger Wärmeleitfähigkeit, enthaltend a) 20-80 Vol% Silika-Aerogel Partikel mit einem Durchmesser von 0,1 bis 20mm b) 20-80 Vol% eines die Partikel der Komponente a) umhüllenden und miteinander verbindenden Styrolpolymerisatschaumstoffs der Dichte 0,01-0,15 g/cm³ und gegebenfalls c) übliche Zusatzstoffe (wie Farbstoffe, Pigmente, Füllstoffe, Flammschutzmittel, Synergisten für Flammschutzmittel, Antistatica, Stabilisatoren, Schmiermittel, Trübungsmittel u. dergleichen);

Aufgabe der Erfindung war es daher, Formkörper bereitzustellen, die bei relativ geringem Bindemittelanteil eine verbesserte Wärmeleitfähigkeit und eine niedrige Dichte aufweisen können. Die Formkörper sollen sich außerdem, beispielsweise durch verbesserte Anwendbarkeit von organischen Bindemitteln, auf einfache Weise herstellen lassen.

Demgemäß wurden Formkörper der Dichte 0,1 bis 0,4 g/cm³, enthaltend Silica-Aerogel-Partikel mit einem mittleren Durchmesser dₘ von 0,001 bis 8 mm, die mittels mindestens eines organischen oder anorganischen Bindemittels miteinander verbunden sind, wobei das Bindemittel Schichtsilikate und/oder Tonminerale enthält, gefunden.

Gegenstand der Erfindung ist außerdem ein Verfahren zur Herstellung dieser Formkörper, wobei man Silica-Aerogel-Partikel mit einem mittleren Durchmesser dₘ von 0,001 bis 8 mm mit einer wäßrigen Suspension, die Schichtsilikate und/oder Tonminerale und mindestens ein anorganisches oder organisches Bindemittel enthält, beschichtet und/oder vermischt und die Masse in einer Form aushärtet.

Die erfindungsgemäßen Formkörper enthalten Silica-Aerogel-Partikel mit einem mittleren Durchmesser dₘ von 0,001 bis 8 mm, wobei die Formkörper vorzugsweise zu mindestens 50 Vol.-% aus Silica-Aerogel-Partikeln mit einem Durchmesser d zwischen 0,5 und 8 mm bestehen.

In einer bevorzugten Ausführungsform der Erfindung enthalten die Formkörper, bezogen auf Silica-Aerogel-Partikel mit einem mittleren Durchmesser dₘ von 0,001 bis 8 mm, 2 bis 50, vorzugsweise 3 bis 30 und besonders bevorzugt 5 bis 15 Gew.-% Silica-Aerogel-Partikel mit einem Durchmesser d von 0,001 bis 0,5 mm.

Die Silica-Aerogel-Partikel mit einem Durchmesser d zwischen 0,5 und 8, vorzugsweise von 1 bis 5, und besonders bevorzugt von 2 bis 4 mm sind in der Regel perl- oder kugelförmig und haben im allgemeinen eine Dichte von 80 bis 300, vorzugsweise 80 bis 250 und besonders bevorzugt 80 bis 150 g/l. Bei den Dichten handelt es sich erfindungsgemäß um Schüttdichten.

Die Silica-Aerogel-Partikel mit einem Durchmesser d von 0,001 bis 0,5 mm haben vorzugsweise einen Durchmesser von 0,02 bis 0,3 und besonders bevorzugt von 0,05 bis 0,15 mm.

Die erfindungsgemäßen Formkörper enthalten vorzugsweise entweder keine Silica-Aerogel-Partikel mit einem Durchmesser d von 0,001 bis 0,5 mm und nur Silica-Aerogel-Partikel mit einem Durchmesser zwischen 0,5 und 8 mm oder aber Mischungen dieser Partikel, bei denen sich die Partikel in Abhängigkeit von ihrem Durchmesser in mindestens zwei, vorzugsweise zwei, voneinander abgegrenzte Fraktionen aufteilen lassen. Hierbei werden vorzugsweise Mischungen von Silica-Aerogel-Partikeln mit einem Durchmesser d von 1 bis 5 mit solchen vom Durchmesser 0,02 bis 0,3 mm verwendet.

Die erfindungsgemäßen Formkörper enthalten als wesentlichen Bestandteil Schichtsilikate und/oder Tonminerale. Vorzugsweise werden Montmorillonite (z.B. Bentonite), Kaolinite und/oder Attapulgite eingesetzt, wovon wiederum die Montmorillonite besonders bevorzugt eingesetzt werden.

Hierbei kann sich die Bevorzugung eines bestimmten Schichtsilikats und/oder Tonminerals auch aus der gewünschten Temperaturbeständigkeit des Formkörpers ergeben.

Die erfindungsgemäßen Formkörper enthalten Schichtsilikate und/oder Tonminerale vorzugsweise in einer Menge von 0,5 bis 10, besonders bevorzugt von 0,5 bis 5 Gew.-%, bezogen auf Silica-Aerogel-Partikel mit einem mittleren Durchmesser dₘ von 0,001 bis 8 mm.

Bei der Verwendung von relativ feinteiligen Silica-Aerogel-Partikeln, beispielsweise solchen mit einem Durchmesser d von 0,001 bis 0,5 mm, empfiehlt es sich im allgemeinen, die Menge an Schichtsilikaten und/oder Tonmineralen etwas höher zu wählen.

Die Silica-Aerogel-Partikel mit einem mittleren Durchmesser dₘ zwischen 0,001 und 8 mm bestehen im wesentlichen aus amorphem Siliziumdioxid und können abhängig von der Art ihrer Herstellung noch Wasserspuren und gegebenenfalls geringe Mengen organischer Verbindungen (bis 10 Gew.-%) enthalten.

Die Silica-Aerogel-Partikel mit einem Durchmesser d zwischen 0,5 und 8 mm können in bekannter Weise aus Wasserglaslösung über die Stufen Silica-Hydrogel, Lösungsmittelaustausch und anschließender überkritischer Trocknung hergestellt werden. Die in der Regel vorliegende Perlform ergibt sich hierbei durch das Versprühen eines schnell gelierenden Kieselsäuresols aus einer speziell konstruierten Düse und Gelierung der Tropfen im Fluge. Nähere Einzelheiten hierzu sind in der DE-A-21 03 243 beschrieben. Der Austausch von Hydrogelwasser gegen andere gegen Siliziumdioxid chemisch inerte Flüssigkeiten ist beispielsweise in US-A-2,093,454, US-A-3,977,993 sowie JP-A-53/025 295 beschrieben.

Die erfindungsgemäß eingesetzten Silica-Aerogel-Partikel mit einem Durchmesser d von 0,001 bis 0,5 werden im allgemeinen durch Mahlen der Silica-Aerogel-Partikel mit einem Durchmesser d zwischen 0,5 und 8 mm auf an sich bekannte Weise hergestellt.

Erfindungsgemäß werden besonders bevorzugt hydrophobierte Silica-Aerogel-Partikel eingesetzt.

Vorteilhaft werden daher als Gelflüssigkeiten zur überkritischen Trocknung trockenes Methanol oder Isopropanol verwendet, so daß die resultierenden Aerogele hydrophob sind, wobei in der Regel Kohlenstoffgehalte von 5 bis 8 Gew.-% resultieren. Ein besonders geeignetes Verfahren ist in der deutschen Patentanmeldung P 43 29 294.1 beschrieben.

In einer bevorzugten Ausführungsform enthalten die in den erfindungsgemäßen Formkörpern verwendeten Silica-Aerogel-Partikel Trübungsmittel, wie sie beispielsweise in der EP-B-0 396 076 beschrieben sind. Diese Trübungsmittel sind vorzugsweise Pigmente, die Infrarotstrahlung der Wellenlänge 3-10 µm streuen, absorbieren oder reflektieren. Vorzugsweise kann hierbei den Silica-Aerogelen bereits in der Vorstufe, dem Hydrogel, sehr homogen ein Pigmentruß eingearbeitet sein (vgl. EP-B-0 396 076). Weitere erfindungsgemäß gut geeignete Trübungsmittel sind beispielsweise Ilmenit, Hämatit, oder Mischoxide (Spinelle).

Sehr gut geeignet sind außerdem getrübte, Kohlenstoff-Partikel enthaltende Silica-Aerogele, die erhältlich sind durch Erhitzen von
a) organisch modifizierten SiO₂-Aerogelen in Gegenwart mindestens eines pyrolisierbaren Kohlenwasserstoffgases und/oder mindestens eines inerten Gases, oder
b) organisch unmodifizierten SiO₂-Aerogelen in Gegenwart mindestens eines pyrolisierbaren Kohlenwasserstoffgases und gegebenenfalls inerten Gases
unter den in der europäischen Patentanmeldung Nr. 93 120 858.1 angegebenen Bedingungen.

In einer besonders bevorzugten Ausführungsform der Erfindung enthalten die Formkörper organische Bindemittel.

Geeignete organische Bindemittel sind beispielsweise Reaktionsklebstoffe wie Epoxidharzklebstoffe, reaktive Polyurethanklebstoffe, Phenol-, Resorcin-, Harnstoff- und Melaminformaldehydharze, Silikonharzklebstoffe, Polyimid- und Polybenzimidazolharze, Schmelzklebstoffe wie Ethylenvinylacetat-Copolymere und Polyamide, sowie wäßrige Dispersionsklebstoffe wie Styrol-Butadien- und Styrol-Acrylester-Copolymerisate.

Geeignet sind hiervon insbesondere wäßrige Dispersionsklebstoffe, wie Styrol-Butadien- und Styrol-Acrylester-Copolymerisate sowie Polyurethandispersionen.

Das organische Bindemittel kann erfindungsgemäß in einer relativ kleinen Menge eingesetzt werden, im allgemeinen in einer Menge von 3 bis 30 Gew.-% des Formkörpers.

Die eingesetzte Menge hängt hierbei von der Art des organischen Bindemittels ab und kann für bestimmte Bindemittel auch darüber liegen.

Bei Verwendung beispielsweise von Silikonharzklebstoffen kann der Anteil des organischen Bindemittels bis zu 60 Gew.-% des Formkörpers betragen.

Für die Herstellung von Formteilen höherer Temperaturbeständigkeit ist die Verwendung von anorganischen Bindemitteln vorteilhaft. Neben den in der EP-A-0 340 707 erwähnten anorganischen Bindemitteln sind insbesondere Hitzeschutz- bzw. Keramikfasermassen auf Basis von Aluminiumsilikaten vorteilhaft. Beispiele hierfür sind die Fasern enthaltenden Bindemittel vom Typ Hesiflex® der Firma Albert Hellhake GmbH & Co, Dortmund. Geeignet sind außerdem z.B. die anorganischen Bindemittel vom Typ Fiberfrax® Fraxbond der Firma Carborundum.

Die erfindungsgemäßen Formkörper werden vorzugsweise dadurch hergestellt, daß man Silica-Aerogel-Partikel mit einem mittleren Durchmesser dₘ zwischen 0,001 und 8 mm mit einer wäßrigen Suspension, die Schichtsilikate und/oder Tonminerale und mindestens ein organisches oder anorganisches Bindemittel enthält, beschichtet und/oder vermischt und die Masse in einer Form aushärtet.

In einer bevorzugten Ausführungsform des erfindungsgemäßen Verfahrens ist die Form an den Innenseiten feuchtigkeitsdurchlässig und hydrophob ausgerüstet.

Dies kann beispielsweise durch Übereinanderlegen von Metallsieben und geeigneten Polymerfolien erfolgen.

Vorzugsweise werden im erfindungsgemäßen Verfahren Silica-Aerogel-Partikel mit einem Durchmesser d zwischen 0,5 und 8, vorzugsweise von 1 bis 5 mm und solche mit einem Durchmesser d von 0,001 bis 0,5 mm, vorzugsweise von 0,02 bis 0,3 eingesetzt. Hierbei werden die Tonminerale und/oder Schichtsilikate vorzugsweise zunächst mit den Silica-Aerogel-Partikeln mit einem Durchmesser d von 0,001 bis 0,5 mm gemischt und zu dieser Mischung anschließend Silica-Aerogel-Partikel mit einem Durchmesser d zwischen 0,5 und 8 mm gegeben.

Die Tonminerale und/oder Schichtsilikate werden beim erfindungsgemäßen Verfahren in der Regel in flüssiger Form, insbesondere als wäßrige Dispersion oder Suspension eingesetzt.

Die neu angesetzte Mischung aus Tonmineralen und/oder Schichtsilikaten mit Wasser wird im allgemeinen für mehrere Stunden zur Quellung und Viskositätseinstellung stehen gelassen und anschließend mit den anorganischen und/oder organischen Bindemitteln versetzt. Danach erfolgt in der Regel erst das Einmischen der Silica-Aerogel-Partikel.

Die erfindungsgemäßen Formkörper können aufgrund ihrer hervorragenden mechanischen Eigenschaften (beispielsweise erhöhte Bruchfestigkeit) und Wärmedämmeigenschaften (im allgemeinen können Wärmeleitfähigkeiten von weniger als 0,025 W/mK erreicht werden) auf den verschiedensten Gebieten eingesetzt werden.

Beispiele hierfür sind die Wärmedämmung von Gebäuden, Heizkesseln, Kühlgeräten, Backöfen (vgl. EP-A-0 475 285), Heizungsrohren, Fernheizleitungen, Flüssiggasbehältern, Nachtspeicheröfen sowie Vakuumisolierungen von technischen Geräten verschiedenster Art.

Ein weiterer Vorteil der erfindungsgemäßen Formkörper ist daneben, daß ihre Oberfläche homogen und glatt ist. Die Formkörper lassen sich außerdem besonders einfach durch Sägen, Schleifen oder Schneiden bearbeiten. Es fallen hierbei keine einzelnen Aerogelpartikel heraus, so daß auch die bearbeiteten Oberflächen homogen erscheinen.

### Beispiele

In den Beispielen wurde die Wärmeleitfähigkeit der Formkörper mit dem Gerät Lambda-Control A 50 der Firma Hesto gemessen. Es zeigten sich hierbei nur sehr geringe Unterschiede (weniger als 1 mW/mK) im Vergleich zu den gemäß DIN 52616 gemessenen Werten der Wärmeleitfähigkeit. Der in den Beispielen angegebene Bindemittelgehalt ist die Differenz aus dem Gewicht des Formkörpers und dem Gewicht der Silica-Aerogel-Partikel.

### Beispiel 1

Zu 120 g einer wäßrigen Polymerdispersion auf Basis von thermoplastischen Styrolbutylacrylatcopolymeren mit einem Polymergehalt von 50 Gew.-% (Acronal® 290 D der BASF Aktiengesellschaft) wurden unter Rühren 80 g einer 1 gew.-%igen wäßrigen Suspension von Magnesium-Montmorillonit (Bentone® LT; eingetragenes Warenzeichen der Firma National Lead) gegeben. Mit dieser Mischung wurden 176 g hydrophobierte Silica-Aerogel-Perlen mit einem mittleren Durchmesser von 3 mm und einer Schüttdichte von 120 g/l verrührt. Die gut streichfähige Mischung wurde in eine rechteckige Form mit einer Grundfläche von 20 x 20 cm gefüllt, die beidseitig an den Stirnflächen durch übereinander gelegte Filter- und Siebflächen begrenzt war. Die obere Stirnfläche wurde mit 13 kg belastet und die auf diese Weise gepreßte Masse für 12 Stunden bei 80°C im Trockenschrank getrocknet. Es wurde ein stabiler Formkörper mit einer Dichte von 188 kg/m³, einem Bindemittelgehalt von 26 Gew.-% und einer Wärmeleitfähigkeit von 0,018 W/mK bei 23°C erhalten.

### Beispiel 2

Zu 25 g einer wäßrigen Polymerdispersion auf Basis von thermoplastischen Styrolbutylacrylatcopolymeren mit einem Polymergehalt von 50 Gew.-% (Acronal® 290 D der BASF Aktiengesellschaft) wurden unter Rühren 90 g einer 1 gew.-%igen wäßrigen Suspension von Magnesium-Montmorillonit (Bentone® LT) gegeben. Anschließend wurden 7 g eines Pulvers aus hydrophobem Silica-Aerogel mit einem mittleren Durchmesser von 0,12 mm eingetragen. Zu dieser Mischung wurden anschließend 37 g hydrophobierte Silica-Aerogel-Perlen mit einem mittleren Durchmesser von 3 mm und einer Schüttdichte von 120 g/l gegeben und innig vermischt. Die gut streichfähige Mischung wurde in eine runde Form mit einem Durchmesser von 10 cm gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse für 20 Stunden bei 50°C im Trockenschrank vorgetrocknet und zusätzlich bei 100°C drei Stunden nachgetrocknet. Es wurde ein stabiler Formkörper mit einer Dichte von 180 kg/m³, einem Bindemittelgehalt von 23 Gew.-% und einer Wärmeleitfähigkeit von 0,017 W/mK bei 23°C erhalten.

### Beispiel 3

Zu 25 g einer wäßrigen Polymerdispersion auf Basis von thermoplastischen Styrolbutylacrylatcopolymeren mit einem Polymergehalt von 50 Gew.-% (Acronal® 290 D der BASF Aktiengesellschaft) wurden unter Rühren 47 g einer 1 gew.-%igen wäßrigen Suspension von Magnesium-Montmorillonit (Bentone® LT) gegeben. Anschließend wurden 13 g eines Pulvers aus hydrophobem Silica-Aerogel mit einem mittleren Durchmesser von 0,12 mm eingetragen. Zu dieser Mischung wurden anschließend 31 g hydrophobierte Silica-Aerogel-Perlen mit einem mittleren Durchmesser von 3 mm und einer Schüttdichte von 120 g/l gegeben und innig vermischt. Die gut streichfähige Mischung wurde in eine runde Form mit einem Durchmesser von 10 cm gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse für 12 Stunden bei 90°C im Trockenschrank vorgetrocknet und zusätzlich bei 130°C zwei Stunden nachgetrocknet. Es wurde ein stabiler Formkörper mit einer Dichte von 182 kg/m³, einem Bindemittelgehalt von 23 Gew.-% und einer Wärmeleitfähigkeit von 0,017 W/mK bei 23°C erhalten.

### Beispiel 4

Zu 44 g einer wäßrigen Polyurethan-Dispersion mit einem Polymergehalt von 27 Gew.-% (Paradur® ZK 42 6486 der BASF Farben und Lacke A.G.) wurden unter Rühren 10 g einer 1 gew.-%igen wäßrigen Suspension von Magnesium-Montmorillonit (Bentone® LT) gegeben. Zu dieser Mischung wurden anschließend 44 g hydrophobierte Silica-Aerogel-Perlen mit einem mittleren Durchmesser von 3 mm und einer Schüttdichte von 120 g/l gegeben und innig vermischt. Die gut fließ- und streichfähige Mischung wurde in eine runde Form mit einem Durchmesser von 10 cm gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse im Trockenschrank für 6 Stunden bei 90°C vorgetrocknet und zusätzlich bei 130°C zwei Stunden nachgetrocknet. Es wurde ein stabiler Formkörper mit einer Dichte von 160 kg/m³, einem Bindemittelgehalt von 21 Gew.-% und einer Wärmeleitfähigkeit von 0,019 W/mK bei 23°C erhalten.

### Beispiel 5

Zu 44 g einer wäßrigen Polyurethan-Dispersion mit einem Polymergehalt von 27 Gew.-% (Paradur® ZK 42 6486 der BASF Lacke und Farben A.G.) wurden unter Rühren 25 g einer 1 gew.-%igen wäßrigen Suspension von Magnesium-Montmorillonit (Bentone® LT) gegeben. Anschließend wurden 7 g eines Pulvers aus hydrophobem Silica-Aerogel mit einem mittleren Durchmesser von 0,12 mm eingetragen. Zu dieser Mischung wurden anschließend 37 g hydrophobierte Silica-Aerogel-Perlen mit einem mittleren Durchmesser von 3 mm und einer Schüttdichte von 120 g/l gegeben und innig vermischt. Die gut streichfähige Mischung wurde in eine runde Form mit einem Durchmesser von 10 cm gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse im Trockenschrank für 8 Stunden bei 90°C vorgetrocknet und zusätzlich bei 130°C zwei Stunden nachgetrocknet. Es wurde ein stabiler Formkörper mit einer Dichte von 167 kg/m³, einem Bindemittelgehalt von 22 Gew.-% und einer Wärmeleitfähigkeit von 0,017 W/mK bei 23°C erhalten.

### Beispiel 6

Zu 30 g einer wäßrigen Polymerdispersion auf Basis von thermoplastischen Styrolbutylacrylatcopolymeren mit einem Polymergehalt von 50 Gew.-% (Acronal® 290 D der BASF Aktiengesellschaft) wurden unter Rühren 20 g einer 1 gew.-%igen wäßrigen Suspension von Magnesium-Montmorillonit (Bentone® LT) gegeben. Zu dieser Mischung wurden 176 g hydrophobierte Silica-Aerogel-Perlen (mittlerer Durchmesser 2,6 mm; Schüttdichte 115 g/l), die mit 7 Gew.-%, bezogen auf die Perlen, Pigmentruß homogen getrübt waren, gegeben. Die gut streichfähige Mischung wurde in eine runde Form (Durchmesser 10 cm) gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse im Trockenschrank für 12 Stunden bei 100°C vorgetrocknet und bei 130°C für 2 Stunden nachgetrocknet. Es wurde ein stabiler Formkörper mit einer Dichte von 188 kg/m³, einem Bindemittelgehalt von 26 Gew.-% und einer Wärmeleitfähigkeit von 0,019 W/mK bei 23°C erhalten.

### Beispiel 7

20 g Epoxidharzpulver (Technikoll® KR 2021 der Baiersdorf AG, Hamburg; gemahlen auf eine mittlere Teilchengröße von 67 µm) wurden in 60 g einer 1 gew.-%igen wäßrigen Suspension von Magnesium-Montmorillonit (Bentone® LT) eingemischt. Hierzu wurden 7 g eines Pulvers aus hydrophobem Silica-Aerogel mit einem mittleren Durchmesser von 0,08 mm und anschließend 37 g hydrophobierte Silica-Aerogel-Perlen (mittlerer Durchmesser 2,6 mm; Schüttdichte 115 g/l) gegeben. Pulver und Perlen waren jeweils mit 7 Gew.-%, bezogen auf Pulver bzw. Perlen, Pigmentruß homogen getrübt. Die streichfähige Masse wurde in eine runde Form (Durchmesser 10 cm) gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse für 8 Stunden bei 130°C und 1 Stunde bei 200°C in einer Stickstoffatmosphäre getempert. Es wurde ein stabiler Formkörper mit einer Dichte von 186 kg/m³, einem Bindemittelgehalt von 32 Gew.-% und einer Wärmeleitfähigkeit von 0,021 W/mK bei 23°C erhalten.

### Beispiel 8

20 g Bismaleinimidharz (Palimid® S 410 KR der BASF Aktiengesellschaft) wurden in 60 g einer 1 gew.-%igen wäßrigen Suspension von Magnesium-Montmorillonit (Bentone® LT) eingemischt. Hierzu wurden 7 g eines Pulvers aus hydrophobem Silica-Aerogel mit einem mittleren Durchmesser von 0,08 mm und anschließend 37 g hydrophobierte Silica-Aerogel-Perlen (mittlerer Durchmesser 2,6 mm; Schüttdichte 115 g/l) gegeben. Pulver und Perlen waren jeweils mit 7 Gew.-%, bezogen auf Pulver bzw. Perlen, Pigmentruß homogen getrübt. Die gut streichfähige Mischung wurde in eine runde Form (Durchmesser 10 cm) gefüllt, die beidseitig an den Stirnflächen durch übereinander gelegte Filter- und Siebflächen begrenzt war. Es wurde mit 2,5 kg belastet und die auf diese Weise gepreßte Masse für 6 Stunden bei 130°C und 2 Stunden bei 240°C in Stickstoffatmosphäre getempert. Es wurde ein stabiler Formkörper mit einer Dichte von 183 kg/m³, einem Bindemittelgehalt von 32 Gew.-% und einer Wärmeleitfähigkeit von 0,019 W/mK bei 23°C erhalten.

### Beispiel 9

20 g Silikonkautschuk (Silopren® LSR 2530 A und B der BAYER AG, gemischt im Verhältnis 1:1, und mit 2 Gew.-% Haftvermittler Baysilone®-Oel MH 15 der BAYER AG versetzt) wurden in 60 g einer 1 gew.-%igen wäßrigen Suspension von Magnesium-Montmorillonit (Bentone® LT) eingemischt. Hierzu wurden 7 g eines Pulvers aus hydrophobem Silica-Aerogel mit einem mittleren Durchmesser von 0,08 mm und anschließend 37 g hydrophobierte Silica-Aerogel-Perlen (mittlerer Durchmesser 2,6 mm; Schüttdichte 115 g/l) gegeben. Pulver und Perlen waren jeweils mit 7 Gew.-%, bezogen auf Pulver bzw. Perlen, Pigmentruß homogen getrübt. Die gut streichfähige Masse wurde in eine runde Form (Durchmesser 10 cm) gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse für 6 Stunden bei 130°C und 2 Stunden bei 200°C in einer Stickstoffatmosphäre getempert. Es wurde ein stabiler Formkörper mit einer Dichte von 170 kg/m³, einem Bindemittelgehalt von 32 Gew.-% und einer Wärmeleitfähigkeit von 0,023 W/mK bei 23°C erhalten.

### Beispiel 10

Zu 16 g einer wäßrigen Polymerdispersion auf Basis von thermoplastischen Styrolbutylacrylatcopolymeren mit einem Polymergehalt von 50 Gew.-% (Acronal® 290 D der BASF Aktiengesellschaft) wurden unter Rühren 262 g einer 4 gew.-%igen wäßrigen Suspension von Magnesium-Montmorillonit (Bentone® LT) gegeben. Anschließend wurden 120 g eines Pulvers aus hydrophobem Silica-Aerogel mit einem mittleren Teilchendurchmesser von 0,12 mm eingetragen. Die streichfähige Masse wurde in eine Form mit einer Grundfläche von 15 x 15 cm² gefüllt, die beidseitig an den Stirnflächen durch gelochte Polypropylenfolien und Metallsiebe begrenzt war. Die obere Stirnfläche wurde mit 7,5 kg belastet und die auf diese Weise gepreßte Masse im Trockenschrank für 12 Stunden bei 80°C und weitere 4 Stunden bei 120°C getrocknet. Es wurde ein stabiler Formkörper mit einer Dichte von 149 kg/m³, einem Bindemittelgehalt von 13 Gew.-% und einer Wärmeleitfähigkeit von 0,019 W/mK bei 23°C erhalten.

### Beispiel 11

In 75 g einer 4 gew.-%igen wäßrigen Suspension von Magnesium-Montmorillonit (Bentone® LT) wurden 20 g eines anorganischen Bindemittels auf Basis von Keramikfasern vom Typ Hesiflex® IV der Fa. Albert Hellhake GmbH&Co, Dortmund, eingerührt. Hierzu wurden 120 g hydrophobe, mit Pigmentruß homogen getrübte Silica-Aerogel-Perlen (mittlerer Durchmesser 2,6 mm; Schüttdichte 115 g/l) gegeben. Die nach innigem Vermischen erhaltene gut streichfähige Masse wurde in eine Form mit einer Grundfläche von 15 x 15 cm² gefüllt, die beidseitig an den Stirnflächen jeweils durch gelochte Polyfluorethylenfolien und Metallsiebe begrenzt war. Die Masse wurde im Trockenschrank für 12 Stunden bei 90°C und weitere 3 Stunden bei 120°C getrocknet. Es wurde ein stabiler Formkörper mit einer Dichte von 149 kg/m³, einem Bindemittelgehalt von 13 Gew.-% und einer Wärmeleitfähigkeit von 0,019 W/mK bei 23°C erhalten.

### Beispiel 12

In 90 g einer 1 gew.-%igen wäßrigen Suspension von Magnesium-Montmorillonit (Bentone® LT) wurden 20 g eines anorganischen Bindemittels mit Keramikfasern vom Typ Hesiflex® IV eingerührt. Hierzu wurden zunächst 7 g eines Pulvers aus hydrophobem Silica-Aerogel mit einem mittleren Teilchendurchmesser von 0,12 mm und anschließend 37 g hydrophobierte Silica-Aerogel-Perlen mit einem mittleren Durchmesser von 3 mm und einer Schüttdichte von 120 g/l gegeben. Die nach innigem Vermischen erhaltene streichfähige Masse wurde in eine kreisrunde Form mit einem Durchmesser von 10 cm gefüllt, die beidseitig an den Stirnflächen durch übereinander gelegte Filter- und Siebflächen begrenzt war. Die obere Stirnfläche wurde mit 2,5 kg belastet und die auf diese Weise gepreßte Masse für 15 Stunden bei 90°C und weitere 2 Stunden bei 130°C getrocknet. Es wurde ein stabiler Formkörper mit einer Dichte von 162 kg/m³, einem Bindemittelgehalt von 23 Gew.-% und einer Wärmeleitfähigkeit von 0,02W/mK bei 23°C erhalten.

Die Beispiele belegen, daß durch Zusatz von Schichtsilikaten und/oder Tonmineralen Formkörper auf der Basis von Silica-Aerogel hergestellt werden können, die bei Dichten von weniger als 200 kg/m³ sehr niedrige Wärmeleitfähigkeiten (unter 0,025 W/mK) besitzen und mechanisch stabil sind.

## Patentansprüche

1. Formkörper der Dichte 0,1 bis 0,4 g/cm³, enthaltend Silica-Aerogel-Partikel mit einem mittleren Durchmesser dₘ von 0,001 bis 8 mm, die mittels mindestens eines organischen oder anorganischen Bindemittels miteinander verbunden sind, wobei das Bindemittel Schichtsilikate und/oder Tonminerale enthält.

2. Formkörper nach Anspruch 1, dadurch gekennzeichnet, daß die Formkörper zu mindestens 50 Vol.-% aus Silica-Aerogel-Partikeln mit einem Durchmesser d zwischen 0,5 und 8 mm bestehen.

3. Formkörper nach Anspruch 1 oder 2, dadurch gekennzeichnet, daß die Formkörper, bezogen auf Silica-Aerogel-Partikel mit einem mittleren Durchmesser dₘ von 0,001 bis 8 mm, 2 bis 50 Gew.-% Silica-Aerogel-Partikel mit einem Durchmesser d von 0,001 bis 0,5 mm enthalten.

4. Formkörper nach einem der Ansprüche 1 bis 3, dadurch gekennzeichnet, daß als Schichtsilikate und/oder Tonminerale Montmorillonite verwendet werden.

5. Formkörper nach einem der Ansprüche 1 bis 4, dadurch gekennzeichnet, daß die Formkörper Schichtsilikate und/oder Tonminerale in einer Menge von 0,5 bis 10 Gew-%, bezogen auf Silica-Aerogel-Partikel mit einem mittleren Durchmesser von 0,001 bis 8 mm, enthalten.

6. Formkörper nach einem der Ansprüche 1 bis 5, dadurch gekennzeichnet, daß sie ein organisches Bindemittel enthalten.

7. Formkörper nach einem der Ansprüche 1 bis 6, dadurch gekennzeichnet, daß die Silica-Aerogel-Partikel hydrophob sind.

8. Verfahren zur Herstellung eines Formkörpers gemäß Anspruch 1, dadurch gekennzeichnet, daß man Silica-Aerogel-Partikel mit einem mittleren Durchmesser dₘ zwischen 0,001 und 8 mm mit einer wäßrigen Suspension, die Schichtsilikate und/oder Tonminerale und mindestens ein anorganisches oder organisches Bindemittel enthält, beschichtet und/oder vermischt und die Masse in einer Form aushärtet.

9. Verfahren nach Anspruch 8, dadurch gekennzeichnet, daß die Form an den Innenseiten feuchtigkeitsdurchlässig und hydrophob ausgerüstet ist.

## Claims

1. A molding which has a density of from 0.1 to 0.4 g/cm³ and contains silica aerogel particles which have a mean diameter dₘ of from 0.001 to 8 mm and are bonded to one another by means of at least one organic or inorganic binder, the binder containing sheet silicates and/or clay minerals.

2. A molding as claimed in claim 1, which contains at least 50 % by weight of silica aerogel particles having a diameter d of from 0.5 to 8 mm.

3. A molding as claimed in claim 1 or 2, which contains from 2 to 50% by weight, based on silica aerogel particles having a mean diameter dₘ of from 0.001 to 8 mm, of silica aerogel particles having a diameter d of from 0.001 to 0.5 mm.

4. A molding as claimed in any of claims 1 to 3, wherein the sheet silicates and/or clay minerals used are montmorillonites.

5. A molding as claimed in any of claims 1 to 4, which contains sheet silicates and/or clay minerals in an amount of from 0.5 to 10% by weight, based on silica aerogel particles having a mean diameter of from 0.001 to 8 mm.

6. A molding as claimed in any of claims 1 to 5, which contains an organic binder.

7. A molding as claimed in any of claims 1 to 6, wherein the silica aerogel particles are hydrophobic.

8. A process for the preparation of a molding as claimed in claim 1, wherein silica aerogel particles having a mean diameter dₘ of from 0.001 to 8 mm are coated and/or mixed with an aqueous suspension which contains sheet silicates and/or clay minerals and at least one inorganic or organic binder, and the material is cured in a mold.

9. A process as claimed in claim 8, wherein the inner surfaces of the mold are rendered moisture-permeable and hydrophobic.

## Revendications

1. Corps moulés de masse volumique comprise entre 0,1 et 0,4 g/cm³ contenant des particules d'aérogel de silice dont le diamètre moyen dₘ vaut de 0,001 à 8 mm, qui sont liées entre elles par au moins un agent liant organique ou minéral, l'agent liant contenant des plaquettes de silicates et/ou des minéraux argileux.

2. Corps moulés selon la revendication 1, caractérisés en ce qu'ils sont constitués d'au moins 50 % en poids de particules d'aérogel de silice ayant un diamètre d compris entre 0,5 et 8 mm.

3. Corps moulés selon la revendication 1 ou 2, caractérisés en ce qu'ils contiennent 2 à 50 % en poids, de particules d'aérogel de silice ayant un diamètre d de 0,001 à 0,5 mm, par rapport aux particules d'aérogel de silice ayant un diamètre moyen dₘ compris entre 0,001 et 8 mm.

4. Corps moulés selon l'une quelconque des revendications 1 à 3, caractérisés en ce que l'on utilise de la montmorillonite en tant que plaquettes de silicates et/ou minéral argileux.

5. Corps moulés selon l'une quelconque des revendications 1 à 4, caractérisés en ce qu'ils contiennent des plaquettes de silicates et/ou des minéraux argileux en une quantité de 0,5 à 10 % en poids, par rapport aux particules d'aérogel de silice ayant un diamètre moyen de 0,001 à 8 mm.

6. Corps moulés selon l'une quelconque des revendications 1 à 5, caractérisés en ce qu'ils contiennent un agent liant organique.

7. Corps moulés selon l'une quelconque des revendications 1 à 6, caractérisés en ce que les particules d'aérogel de silice sont hydrophobes.

8. Procédé de préparation d'un corps moulé selon la revendication 1, caractérisé en ce que l'on enduit et/ou mélange des particules d'aérogel de silice ayant un diamètre moyen dₘ compris entre 0,001 et 8 mm avec une suspension aqueuse contenant des plaquettes de silicates et/ou des minéraux argileux et au moins un agent liant organique ou minéral, et on fait durcir la masse dans un moule.

9. Procédé selon la revendication 8, caractérisé en ce que les parois intérieures du moule sont perméables à l'humidité et hydrophobes.
